# EUROPEAN PATENT APPLICATION

(11) **EP 3 176 383 A1**
(43) Date of publication of application: **07.06.2017**
(21) Application number: 16199988.3
(22) Date of filing: 22.11.2016
(51) Int. Cl.: F01D 11/24, F01D 25/12, F23R 3/00

(54) **HT ENHANCEMENT BUMPS/FEATURES ON COLD SIDE**

(30) Priority: 02.12.2015 US 201514956875
(71) Applicant: General Electric Company, Schenectady, NY 12345 (US)
(72) Inventor: STAPLETON, David Scott, Lynn, MA Massachusetts 01905 (US); BALDIGA, Jonathan David, Lynn, MA Massachusetts 01905 (US); CORMAN, Gregory Scot, Niskayuna, NY New York 12309 (US)
(74) Representative: Fischer, Jens Peter

(57) **Abstract**

The present disclosure is directed to a composite component (100) for a gas turbine engine (10). The composite component (26, 54, 64, 74, 84, 84(a), 84(b), 100) includes a composite wall (101) having a flow side surface (104) in contact to the main hot gas flow and a non-flow side surface (102) in possible contact to a cooling flow. The non-flow side (102) surface includes at least one composite cooling projection (116(a)-(e)) positioned on and extending outwardly from the non-flow side surface (102). The cooling protrusions (116,118,120,122,124) may be of any shape such as rectangular (116), cylindrical (120), conical (118) or hemispherical (122). The plurality of the cooling protrusions (116,118,120,122,124) may be arranged uniformly or non-uniformly on the surface in circumferential and axial direction respectively. Thus, heat transfer through the component (26, 54, 64, 74, 84, 84(a), 84(b), 100) is increased.

## Description

### FIELD OF THE INVENTION

The present disclosure relates generally to a shroud for a gas turbine engine. More particularly, the present disclosure relates to a shroud for a gas turbine engine having a plurality of cooling projections.

### BACKGROUND OF THE INVENTION

A gas turbine engine generally includes, in serial flow order, a compressor section, a combustion section, a turbine section, and an exhaust section. In operation, air enters an inlet of the compressor section where one or more axial compressors progressively compress the air until it reaches the combustion section. Fuel mixes with the compressed air and burns within the combustion section, thereby creating combustion gases. The combustion gases flow from the combustion section through a hot gas path defined within the turbine section and then exit the turbine section via the exhaust section.

In particular configurations, the turbine section includes, in serial flow order, a high pressure (HP) turbine and a low pressure (LP) turbine. The HP and the LP turbines each include one or more turbine blades that extract kinetic energy and/or thermal energy from the combustion gases flowing therethrough. Each turbine blade typically includes a turbine shroud, which forms a ring or enclosure around the turbine blade. That is, each turbine shroud is positioned radially outwardly from and circumferentially encloses each corresponding turbine blade. In this respect, each turbine blade and each corresponding turbine shroud form a gap therebetween.

The components defining the hot gas path, such as the turbine shrouds, may be constructed from a composite material (e.g., a ceramic matrix composite) or another material capable of withstanding prolonged exposure to the hot combustion gases. Furthermore, cooling air (e.g., bleed air from the compressor section) may be routed to the radially outer surface or cold side of the shrouds to cool the same. Conventional composite turbine shrouds typically include a planar radially outer surface or cold side cooled by impingement air. This cooling may reduce the efficiency and increase the specific fuel consumption the gas turbine engine. Accordingly, a shroud for a gas turbine engine that provides improved heat transfer would be welcomed in the technology.

### BRIEF DESCRIPTION OF THE INVENTION

Aspects and advantages of the invention will be set forth in part in the following description, or may be obvious from the description, or may be learned through practice of the invention.

The shroud for a gas turbine disclosed herein includes one or more cooling projections extending radially outwardly from the radially outer surface thereof. In this respect, the shroud disclosed herein has a greater surface area exposed to cooling air than convention shrouds, thereby resulting in improved heat transfer. As such, the shroud disclosed herein increases gas turbine efficiency and decreases specific fuel consumption.

In one aspect, the present disclosure is directed to a composite component for a gas turbine. The composite component includes a composite wall having a non-flow side surface. The non-flow side surface includes at least one composite cooling projection positioned on and extending outwardly from the non-flow side surface.

Another aspect of the present disclosure is directed to a gas turbine. The gas turbine includes a compressor section, a combustor, a turbine section, and at least one composite shroud. The at least one composite shroud includes a composite shroud wall having a radially outer surface and a radially inner surface. At least one composite cooling projection extends outwardly from the radially outer surface of the shroud wall.

A further aspect of the present disclosure is directed to a method of forming a composite component for a gas turbine. The method includes forming a composite wall of the composite component. The composite wall includes a non-flow side surface. At least one composite cooling projection is formed on the non-flow side surface of the composite wall. The composite wall and the at least one composite cooling projection are cured.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of an exemplary high bypass turbofan jet engine in accordance with the embodiments disclosed herein;
FIG. 2 is a cross-sectional side view of a high pressure turbine portion of the gas turbine engine shown in FIG. 1, illustrating the location of a shroud in a high pressure (HP) turbine;
FIG. 3 is a perspective view of one embodiment of the shroud as disclosed herein;
FIG. 4 is a side view of the embodiment of the shroud shown in FIG. 3, illustrating one or more cooling projections extending radially outwardly therefrom;
FIG. 5(a) is a perspective view of one embodiment of a rectangular cooling projection, which may extend radially outwardly from the shroud shown in FIGS. 3-4;
FIG. 5(b) is a perspective view of one embodiment of a conical cooling projection, which may extend radially outwardly from the shroud shown in FIGS. 3-4;
FIG. 5(c) is a perspective view of one embodiment of a cylindrical cooling projection, which may extend radially outwardly from the shroud shown in FIGS. 3-4;
FIG. 5(d) is a perspective view of one embodiment of a hemispherical cooling projection, which may extend radially outwardly from the shroud shown in FIGS. 3-4;
FIG. 5(e) is a perspective view of one embodiment of a cooling projection defining a cavity therein, which may extend radially outwardly from the shroud shown in FIGS. 3-4;
FIG. 6 is a top view of the shroud, illustrating a uniform arrangement of cooling projections extending radially outwardly therefrom;
FIG. 7 is a top view of the shroud, illustrating a non-uniform arrangement of cooling projections extending radially outwardly therefrom;
FIG. 8 is a top view of the shroud, illustrating a plurality of concentric cooling projections extending radially outwardly therefrom;
FIG. 9 is a flow chart illustrating one method of forming the shroud in accordance with the embodiments disclosed herein;
FIG. 10 illustrates forming one or more hemispherical cooling projections with a press;
FIG. 11 illustrates forming the one or more hemispherical cooling projections with a roller;
FIG. 12 illustrates attaching the one or more hemispherical cooling projections to the shroud with a mandrel; and
FIG. 13 illustrates attaching the one or more hemispherical cooling projections to the shroud with the roller.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. Although exemplary embodiments of the present invention will be described generally in the context of a turbine shroud incorporated into a turbofan jet engine for purposes of illustration, one of ordinary skill in the art will readily appreciate that embodiments of the present invention may be applied to any turbine incorporated into any turbomachine and are not limited to a gas turbofan jet engine unless specifically recited in the claims.

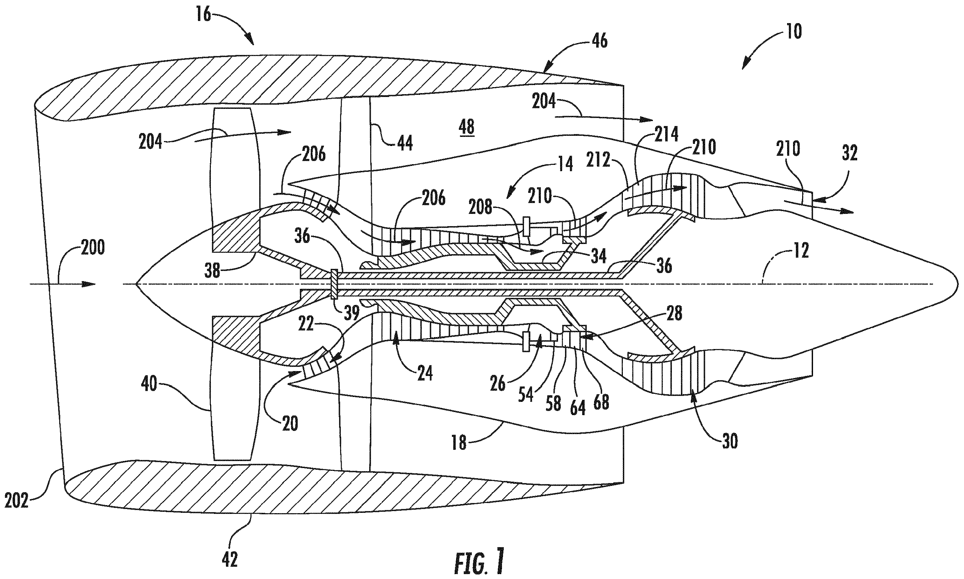

Referring now to the drawings, wherein identical numerals indicate the same elements throughout the figures, FIG. 1 is a schematic cross-sectional view of an exemplary high bypass turbofan type gas turbine engine 10 ("turbofan 10") and may incorporate various embodiments of the present disclosure. As shown in FIG. 1, the turbofan 10 has a longitudinal or axial centerline axis 12 extending therethrough for reference purposes. In general, the turbofan 10 may include a core turbine or gas turbine engine 14 disposed downstream from a fan section 16.

The gas turbine engine 14 may generally include a substantially tubular outer casing 18 that defines an annular inlet 20. The outer casing 18 may be formed from multiple casings. The outer casing 18 encases, in serial flow relationship, a compressor section having a booster or low pressure (LP) compressor 22 and a high pressure (HP) compressor 24, a combustor 26, a turbine section having a high pressure (HP) turbine 28 and a low pressure (LP) turbine 30, and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The LP spool 36 may also connect to a fan spool or shaft 38 of the fan section 16. In particular embodiments, as shown in FIG. 1, the LP spool 36 may connect directly to the fan spool 38, such as in a direct-drive configuration. In alternative configurations, the LP spool 36 may connect to the fan spool 38 via a reduction gear 39, such as in an indirect-drive or geared-drive configuration.

As shown in FIG. 1, the fan section 16 includes a plurality of fan blades 40 coupled to and extending radially outwardly from the fan spool 38. An annular fan casing or nacelle 42 circumferentially surrounds the fan section 16 and/or at least a portion of the gas turbine engine 14. The nacelle 42 may be supported relative to the gas turbine engine 14 by a plurality of circumferentially-spaced outlet guide vanes 44. Moreover, a downstream section 46 of the nacelle 42 may extend over an outer portion of the gas turbine engine 14 to define a bypass airflow passage 48 therebetween.

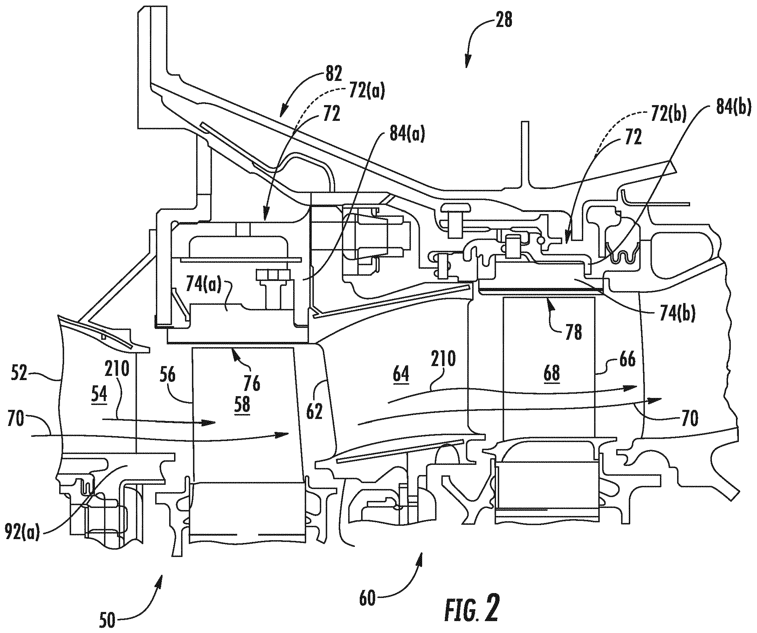

FIG. 2 is a cross-sectional view of the HP turbine 28 portion of the gas turbine engine 14 as shown in FIG. 1, which may incorporate various embodiments disclosed herein. As shown in FIG. 2, the HP turbine 28 includes, in serial flow relationship, a first stage 50 having a row 52 of one or more stator vanes 54 (only one shown) axially spaced apart from a row 56 of one or more turbine rotor blades 58 (only one shown). The HP turbine 28 further includes a second stage 60 having a row 62 of one or more stator vanes 64 (only one shown) axially spaced apart from a row 66 of one or more turbine rotor blades 68 (only one shown).

The turbine rotor blades 58, 68 extend radially outwardly from and are coupled to the HP spool 34 (FIG. 1). As shown in FIG. 2, the stator vanes 54, 64 and the turbine rotor blades 58, 68 at least partially define a hot gas path 70 for routing combustion gases from the combustor 26 (FIG. 1) through the HP turbine 28. As shown in FIG. 1, the rows 52, 62 of the stator vanes 54, 64 are annularly arranged about the HP spool 34 and the rows 56, 66 of the turbine rotor blades 58, 68 are circumferentially spaced around the HP spool 34.

As shown in FIG. 2, various embodiments of the HP turbine 28 include at least one turbine shroud 72. For example, the HP turbine 28 may include a first turbine shroud 72(a) and a second turbine shroud 72(b). Each turbine shroud 72(a), 72(b) generally forms a ring or shroud around the corresponding row 56, 66 of turbine rotor blades 58, 68.

Each turbine shroud 72(a), 72(b) may be radially spaced apart from one or more corresponding blade tips 76, 78 of the turbine rotor blades 58, 68. One or more pins (not shown) may couple each turbine shroud 72(a), 72(b) to a corresponding turbine shroud mount 84(a), 84(b). The turbine shroud mount 84(a), 84(b) may connect to a casing 82 of the turbofan 10.

This arrangement forms clearance gaps between the blade tips 76, 78 and sealing surfaces or hot side surfaces 80(a), 80(b). As mentioned above, it is generally desirable to minimize the clearance gap between the blade tips 76, 78 and the turbine shrouds 74(a), 74(b), particularly during cruise operation of the turbofan 10, to reduce leakage from the hot gas path 70 over the blade tips 76, 78 and through the clearance gaps. In particular embodiments, at least one of the turbine shrouds 74(a), 74(b) may be formed as a continuous, unitary, or seamless ring.

As illustrated in FIG. 1, air 200 enters an inlet portion 202 of the turbofan 10 during operation thereof. A first portion 204 of the air 200 flows into the bypass flow passage 48, and a second portion 206 of the air 200 enters the inlet 20 of the LP compressor 22. The LP compressor 22 progressively compresses the second portion of air 206 flowing therethrough en route to the HP compressor 24. The HP compressor 24 further compresses the second portion of the air 206 flowing therethrough 24, thus providing compressed air 208 to the combustor 26 where it mixes with fuel and burns to provide combustion gases 210.

The combustion gases 210 flow through the HP turbine 28 where the stator vanes 54, 64 and turbine rotor blades 58, 68 extract a first portion of kinetic and/or thermal energy from the combustion gases 210. This energy extraction supports operation of the HP compressor 24. The combustion gases 210 then flow through the LP turbine 30 where sequential stages of LP turbine stator vanes 212 and LP turbine rotor blades 214 coupled to the LP shaft or spool 36 extract a second portion of thermal and/or kinetic energy from the combustion gases 210. This energy extraction causes the LP shaft or spool 36 to rotate, thereby supporting operation of the LP compressor 22 and/or rotation of the fan spool or shaft 38. The combustion gases 210 then flow through the jet exhaust nozzle section 32 of the gas turbine engine 14.

Along with a turbofan 10, a core turbine 14 serves a similar purpose and sees a similar environment in land-based gas turbines, turbojet engines in which the ratio of the first portion of air 204 to the second portion of air 206 is less than that of a turbofan, and unducted fan engines in which the fan section 16 is devoid of the nacelle 42. In each of the turbofan, turbojet, and unducted engines, a speed reduction device (e.g., the reduction gearbox 39) may be included between any shafts and spools. For example, the reduction gearbox 39 may be disposed between the LP spool 36 and the fan shaft 38 of the fan section 16.

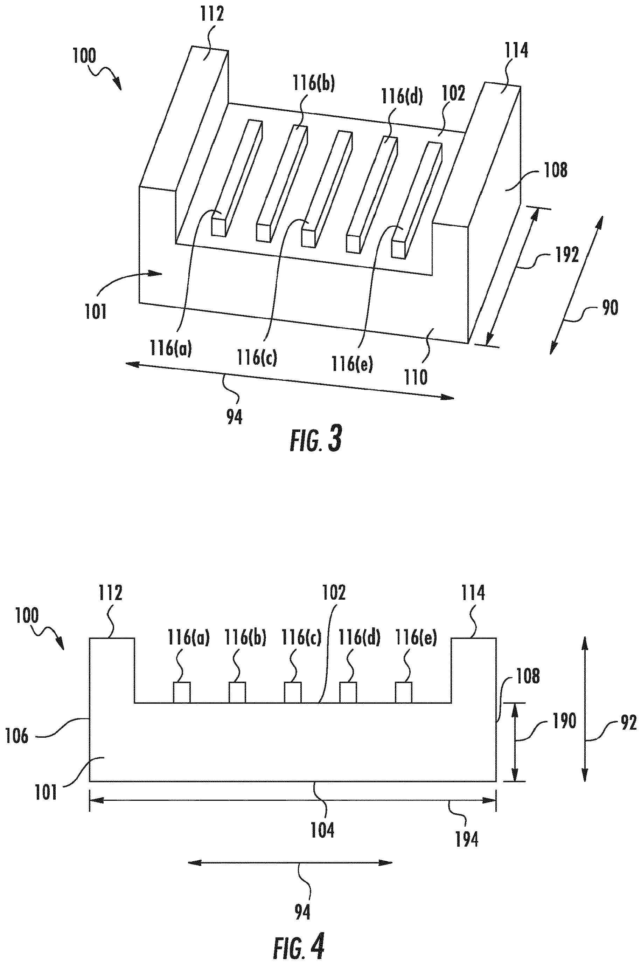

FIGS. 3-4 illustrate the various features of a shroud 100, which may correspond with or be installed in place of any of the shrouds 74(a-b). In this respect, shroud 100 as may be incorporated into the HP turbine 28 shown in FIG. 2. FIG. 3 is a perspective view of the shroud 100 in accordance with the embodiments disclosed herein. FIG. 4 is a cross-sectional view of the shroud 100, illustrating one or more cooling projections 116.

As illustrated in FIGS. 3-4, the shroud 100 defines an axial direction 90, a radial direction 92, and a circumferential direction 94. In general, the axial direction 90 extends along the longitudinal axis 12, the radial direction 92 extends orthogonally outward from the longitudinal axis 12, and the circumferential direction 94 extends concentrically around the longitudinal axis 12.

As illustrated in FIGS. 3-4, the shroud 100 includes a shroud wall 101. More specifically, the shroud wall 101 includes a radially outer surface 102 and a radially inner surface 104 spaced apart from the radially outer surface 102 by a radial thickness 190. The radially inner surface 104 is exposed to the combustion gases 210 if the shroud is positioned in the HP turbine 28 or the LP turbine 30 and is, accordingly, a flow side surface. Conversely, the radially outer surface 102 is not exposed to the combustion gases 210. In this respect, the radially outer surface 102 is a non-flow side surface. The radially inner surface 104 may be curved or planar in the circumferential direction 94. The shroud wall 101 also includes a first circumferential surface 106 and a second circumferential surface 108 spaced apart from the first circumferential surface 106 by a circumferential length 194. Furthermore, the shroud wall 101 includes a first axial surface 110 and a second axial surface (not shown) spaced apart from the first axial surface by an axial length 192.

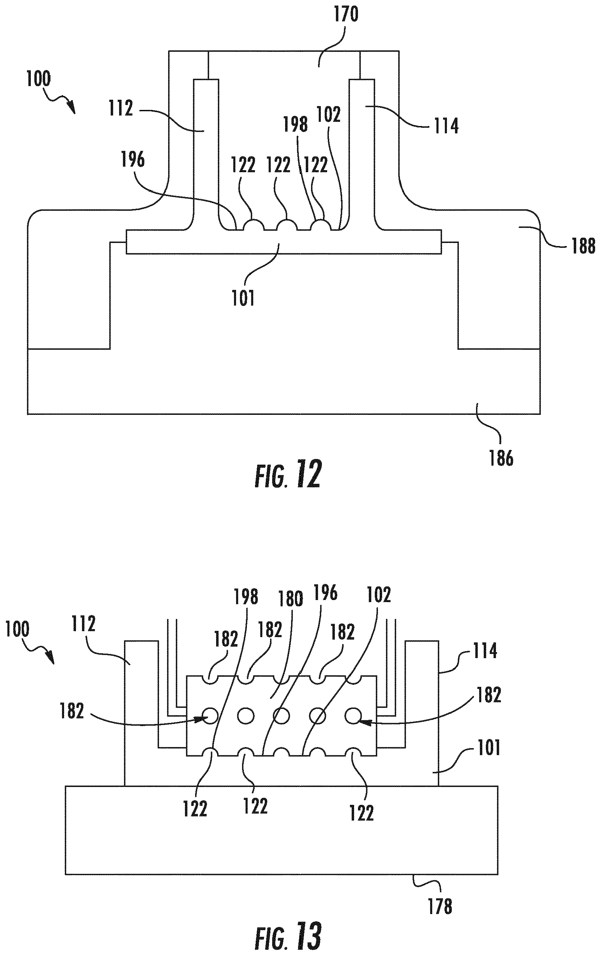

In the embodiment shown in FIGS. 3-4, the shroud 100 includes a first mount 112 and a second mount 114 for coupling the shroud 100 to the turbine shroud mount 84. Although, the shroud 100 may include more or less mounts as is necessary or desired. In particular, the first and the second mounts 112, 114 may extend radially outwardly from the radially outer surface 102. The first and the second mounts 112, 114 may be integrally formed with the shroud wall 101 as illustrated in FIGS. 3-4 or formed separately. The circumferentially outer surfaces of the first and the second mounts 112, 114 may be circumferentially aligned with the first and the second circumferential surfaces 106, 108 of the shroud wall 101 as illustrated in FIGS 3-4. Alternately, the circumferentially outer surfaces of the first and the second mounts 112, 114 may be circumferentially spaced apart from the first and the second circumferential surfaces 106, 108 of the shroud wall 101 as illustrated in FIG. 12. Furthermore, the first mount 112 is circumferentially spaced apart from the second mount 114. In some embodiments, the first and the second mounts 112, 114 include one or more apertures (not shown) for receiving a corresponding mounting pin (not shown). In further alternate embodiments, the first and the second mounts 112, 114 may be circumferentially aligned with or circumferentially spaced apart from the axial surfaces 110.

The shroud 100 further includes the one or more cooling projections, e.g., one or more rectangular cooling projections 116, which extend radially outwardly from the radially outer surface 102. The one or more cooling projections increase the surface area of shroud 100, thereby increasing the rate at which the shroud may be cooling by cooling air (e.g., bleed air from the LP compressor 22 and/or the HP compressor 24). As illustrated in FIGS. 3-4, the shroud 100 may include five axially aligned and circumferentially spaced apart rectangular fin-like cooling projections 116(a), 116(b), 116(c), 116(d), 116(e). Nevertheless, the shroud 100 may include more or less rectangular cooling projections 116 as is necessary or desired. Furthermore, the cooling projections may have different shapes and/or different arrangements on the radially outer surface 116 of the shroud wall 101 as will be discussed in greater detail below.

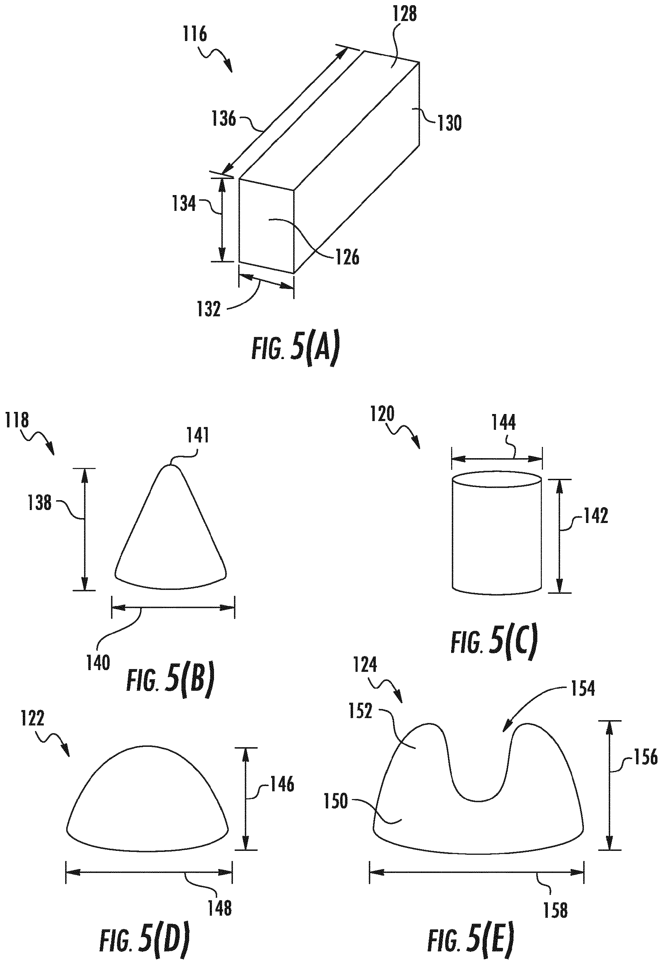

FIGS. 5(a-e) illustrate various embodiments of the one or more cooling projections. More specifically, FIG. 5(a) illustrates one of the one or more rectangular cooling projections 116 shown in FIGS. 3-4 in greater detail. In particular, the rectangular cooling projection 116 includes a pair of longitudinal surfaces 126 (only one is shown) separated by a longitudinal distance 136. The rectangular cooling projection 116 further includes a pair of radial surfaces 128 (only one is shown) separated by a radial distance 134 and a pair of transverse surfaces 130 (not shown) separated by a transverse distance 132. As used herein, the longitudinal distance 136 is the longer of the length and the width of the rectangular projection 116, and the transverse distance 132 is the shorter of the length and the width of the rectangular projection 116.

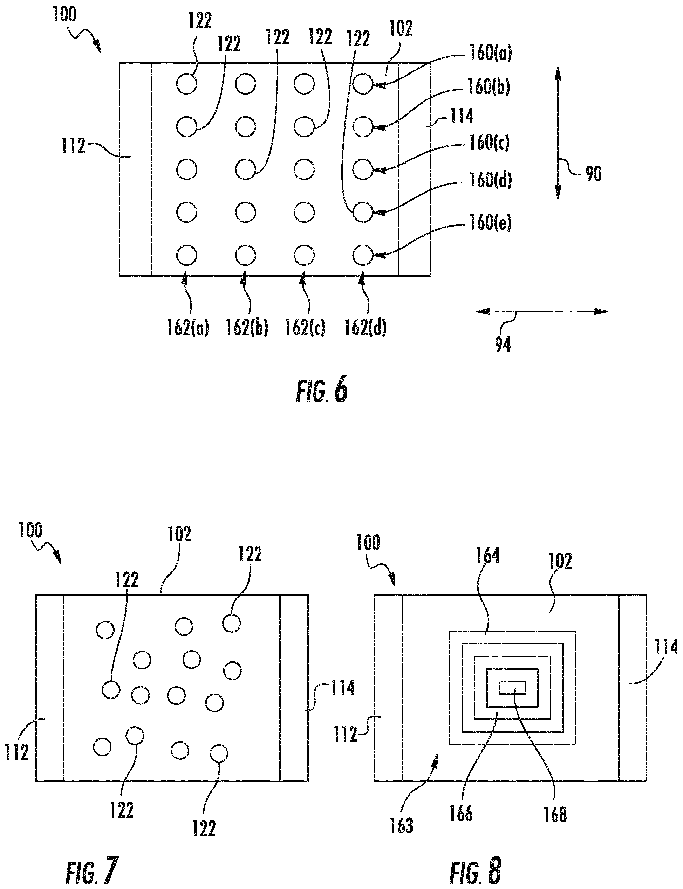

In some embodiments, the rectangular cooling projections 116 may be fin-like. More specifically, the longitudinal distance 136 may be much longer (e.g., ten times longer) than the transverse distance 132. Furthermore, the radial distance 134 may be longer, e.g., two times longer, than the transverse distance 132. In this respect, the cooling projections 116 may appear as a series of circumferentially spaced apart and axially aligned fins as illustrated in FIGS. 3-4. Nevertheless, the longitudinal distance 136 may be only be slightly longer (e.g., two times longer or less) than the transverse distance 132. The rectangular cooling projections 116 may be arranged in rows and columns as illustrated in FIG. 6 and as will be discussed in greater detail below. Furthermore, the longitudinal distance 136 and the transverse distance 132 may be the same (i.e., the rectangular projection 116 has a square cross section). Moreover, the radial distance 134 may be less than or equal to the transverse distance 132.

FIG. 5(b) illustrates a conical projection cooling 118 defining a radial distance 138 and a diameter 140. The radial distance 138 may be longer, shorter, or equal to the diameter 140. The apex of the conical projection 118 may be rounded and, accordingly, include a radius 141.

FIG. 5(c) illustrates a cylindrical cooling projection 120 defining a radial distance 142 and a diameter 144. The radial distance 142 may be longer, shorter, or equal to the diameter 144.

FIG. 5(d) illustrates a hemispherical cooling projection 122 defining a radial distance 146 and a diameter 148. The radial distance 146 may be longer, shorter, or equal to the diameter 148.

FIG. 5(e) illustrates a cooling projection 124 defining a cavity 154 therein. More specifically, the cooling projection 124 includes a base portion 150 and an annular wall portion 152 positioned radially outwardly from the bass portion 150. The annular wall portion 152 defines the cavity 154, which may be conical, cylindrical, hemispherical, or any other suitable shape. The cooling projection 124 may be any of the rectangular, conical, cylindrical, and hemispherical cooling projections 116, 118, 120, 122, 124 with the cavity 154 formed therein.

Nevertheless, the one or more cooling projections may other suitable shape (e.g., triangular) as well. Furthermore, if the one or more cooling projections include a plurality of cooling projections, the plurality of cooling projections may include various differently-shaped cooling projections. For example, the plurality of cooling projections may include the conical cooling projections 118 and the hemispherical cooling projections 122.

In some embodiments, the radial lengths 134, 138, 142, 146, 156 of the one cooling projection 116, 118, 120, 122, 124 may be 0.1 inches or smaller. Although, the radial lengths 134, 138, 142, 146, 156 of the one cooling projection 116, 118, 120, 122, 124 may be greater than 0.1 inches as well.

FIGS. 6-7 illustrate different arrangements of the hemispherical cooling projections 122 on the radially outer surface 102 of the shroud wall 101. Although these cooling projection arrangements are shown in the context of the hemispherical cooling projections 122, these cooling projection arrangements may apply to the rectangular, conical, and cylindrical cooling projections 116, 118, 120 as well. In fact, these cooling projection arrangements may apply to cooling projections having any suitable shape, including the cooling projection 124 defining the cavity 154.

As illustrated in FIG. 6, the hemispherical cooling projections 122 may be arranged generally uniformly. More specifically, the hemispherical cooling projections 122 may be arranged in various axially spaced apart and a circumferentially aligned rows 160 and circumferentially spaced apart and axially aligned columns 162. In FIG. 6, for example, the hemispherical cooling projections 122 may be arranged in five rows 160(a), 160(b), 160(c), 160(d), 160(e) and four columns 162(a), 162(b), 162(c), 162(d). In this respect, the shroud 100 includes twenty hemispherical cooling projections 122. Although, the shroud 100 may have more or less rows 160 and/or columns 162 as is necessary or desired. Furthermore, each of the rows 160 and or columns 162 may include more or less hemispherical cooling projections 122 as is necessary or desired. Moreover, the hemispherical cooling projections 122 may be arranged in other suitable uniform arrangements (e.g., concentric circles).

In some embodiments, the hemispherical cooling projections 122 may be positioned in a non-uniform manner as illustrated in FIG. 7. In some embodiments, such as the one shown in FIG. 7, the arrangement of hemispherical cooling projections 122 may be entirely random. Alternately, the shroud 100 may include a random arrangement of groups of uniformly positioned hemispherical cooling projections 122.

FIG. 8 illustrates a further arrangement of cooling projections, namely a plurality of concentric cooling projections 163. As illustrated in FIG. 8, for example, the plurality of concentric cooling projections 163 may include a first ring-like cooling projection 164 and a second concentric ring-like cooling projection 166 positioned within the first ring-like cooling projection 164. A center cooling projection 168, which may be the rectangular cooling projection 116, may be positioned within the second concentric ring-like cooling projection 164. Although the embodiment shown in FIG. 8 includes two ring-like cooling projections 164, 166, the shroud 100 may include more or less ring-like cooling projections as is necessary or desired. The ring-like cooling projections 164, 166 may polygonal (e.g., rectangular as illustrated in FIG. 8), circular, elliptical, or any other suitable shape.

The shroud 100, including the shroud wall 101, the first mount 112, the second mount 114, and the one or more rectangular, conical, cylindrical, hemispherical cooling projections 116, 118, 120, 122 and the cooling projection 124 that defines a cavity 154 are formed from a composite material. Preferably, the shroud 100 is formed from a ceramic matrix composite ("CMC") material. In one embodiment, the CMC material used may be a continuous fiber reinforced CMC material. For example, suitable continuous fiber reinforced CMC materials may include CMC materials reinforced with continuous carbon fibers, oxide fibers, silicon carbide monofilament fibers, and other CMC materials including continuous fiber lay-ups and/or woven fiber preforms. In other embodiments, the CMC material used may be a discontinuous reinforced CMC material or unreinforced silicon carbide slurry matrix plies. For instance, suitable discontinuous reinforced CMC materials may include particulate, platelet, whisker, discontinuous fiber, in situ, and nano-composite reinforced CMC materials. In other embodiments, the substrate may be formed from any other suitable non-metallic composite material. For instance, in an alternative embodiment, the substrate may be formed from an oxide-oxide high temperature composite material.

The various embodiments of the one or more cooling projections 116, 118, 120, 122, 124 are discussed below in the context of the shroud 100. Nevertheless, the one or more cooling projections 116, 118, 120, 122, 124 may be positioned on the non-flow side of any suitable composite gas turbine component, including turbine shroud mounts, compressor shroud mounts, turbine stator vanes, compressor stator vanes, combustors (e.g., combustor liners), etc.

The cooling projections 116, 118, 120, 122, 124 increase the surface area of the radially outer surface 102 of the shroud 100, which is exposed to cooling air. Increasing the surface area of the radially outer surface 102 exposed to cooling air reduces flow path side (i.e., the radially inner surface 104) shroud temperatures.

To estimate the temperature reduction, the heat transfer coefficient of the radially outer surface 102 is multiplied by the ratio of the total surface area of the radially outer surface 102 with the cooling projections 116, 118, 120, 122, 124 to the surface area of the radially outer surface 102 without the cooling projections 116, 118, 120, 122, 124. For example, the radially outer surface 102 of the shroud wall 101 formed from CMC may have a heat transfer coefficient of 1000 BTU / hr*ft²*F and surface area of 10 in². Adding the cooling projections 116, 118, 120, 122, 124 to the radially outer surface 102 of the CMC shroud wall 101 may increase the surface area of the radially outer surface 102 from 10 in² to 13 in². The heat transfer coefficient of the radially outer surface 102 is scaled by the ratio of total surface area, which is 1.3 (i.e., 13 in^2 / 10 in^2). In this respect, the resultant heat transfer coefficient of the radially outer surface 102 of the shroud 100 would be 1.3*1000 BTU / hr*ft²*F = 1300 BTU / hr*ft²*F. As such, the cooling projections 116, 118, 120, 122, 124 create a thirty percent increase in heat transfer from the shroud 100. Although, the cooling projections 116, 118, 120, 122, 124 may create a smaller increase (e.g., fifteen percent) or a larger increase (e.g., fifty percent) in heat transfer from the shroud 100. This scaled estimate may be verified with testing and calibrated as needed. The increase in surface area may vary depending on the complexity of geometry, number, and height of the cooling projections 116, 118, 120, 122, 124 extending outwardly from the radially outer surface 102 of the shroud 100.

This increase in the heat transfer coefficient on the cool radially outer surface 102 of the shroud 100 improves heat transfer and reduces temperatures throughout the shroud 100. The greatest temperature reduction occurs on the radially outer surface 102 of the shroud 100. Although, a lesser, but still appreciable, temperature reduction on the radially inner surface 104 of the shroud 100. The magnitude of reduction depends on the thermal system, including factors such as the backside and flowpath side air temperatures and heat transfer coefficients, CMC and coating thicknesses and conductivities, and other differences in geometry.

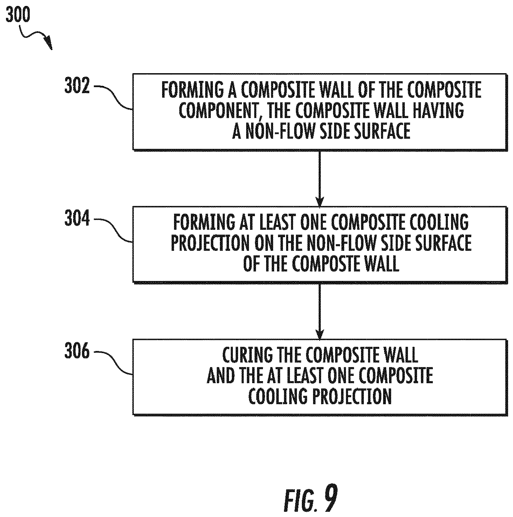

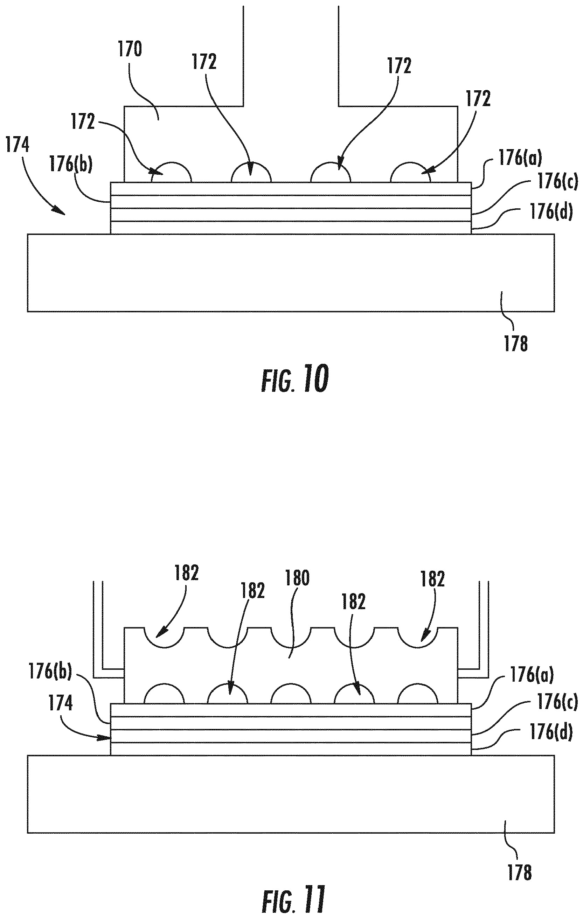

FIGS. 9-13 illustrate methods for forming a composite gas turbine component, such as the shroud 100. More specifically, FIG. 9 is a flow chart illustrating a method (300) for forming the shroud 100 or other composite gas turbine component in accordance with the embodiments disclosed herein. FIG. 10 illustrates forming the one or more hemispherical cooling projections 122 separately from the shroud wall 101 with a press 170. FIG. 11 illustrates forming the one or more hemispherical cooling projections 122 separately from the shroud wall 101 with a roller 180. FIG. 12 illustrates compressing the radially outer surface 102 of the shroud wall 101 with the press 170 to form the one or more hemispherical cooling projections 122. FIG. 13 illustrates compressing the radially outer surface 102 of the shroud wall 101 with a roller 180 to form the one or more hemispherical cooling projections 122.

The method (300) is described below in the context of forming and/or attaching the one or more hemispherical cooling projections 122 to the shroud wall 101. Nevertheless, the method (300) may be used to form and/or attach the one or more rectangular, conical, or cylindrical projections 116, 118, 120 to the shroud wall 101. In fact, the method (300) may be used to form and/or attach cooling projections having any suitable shape, including the one or more cooling projections 124 having a cavity 154 formed therein. Furthermore, the method (300) may be used to form and/or attach one or more cooling projections to any suitable gas turbine component having a non-flow side surface, such as turbine shroud mounts, compressor shroud mounts, turbine stator vanes, compressor stator vanes, or combustors (e.g., combustor liners).

In step (302), the shroud wall 101 is formed. In some embodiments, step (302) may include integrally forming the first and the second mounts 112, 114 with the shroud wall 101. In alternate embodiments, step (302) may include forming a composite wall having a non-flow side surface for other suitable gas turbine components.

In step (304), the one or more hemispherical cooling projections 122 are formed on the radially outer surface 102 of the shroud wall 101. In some embodiments, the one or more hemispherical cooling projections 122 may be formed separately from the shroud wall 101 with the press 170. More specifically, the press 170 defines one or more press cavities 172, which are sized and shaped to form the hemispherical cooling projections 122. Although, the one or more press cavities 172 may be sized and shaped to form any suitable shape of cooling projection as well. While the press 170 shown in FIG. 10 includes four press cavities 172, the press 170 may include more or less press cavities 172 as is necessary or desired. A plurality of composite plies 174 (e.g., CMC plies) are placed on a platform 178. As illustrated in FIG. 10, the plurality of plies 174 may include four plies 176(a), 176(b), 176(c), 176(d). Although, the plurality of plies 174 may include more or less plies 176 as is necessary or desired. The press 170 exerts downward pressure on the plurality of plies 174. Portions of the plurality of plies 174 are forced into the one or more press cavities 172, thereby forming the one or more hemispherical cooling projections 122. In some embodiments, the press 170 may be incorporated into an autoclave to permit simultaneous forming and curing of the one or more hemispherical cooling projections 122 and the shroud wall 101.

The one or more hemispherical cooling projections 122 may also be formed separately from the shroud wall 101 with a roller 180 as illustrated in FIG. 11. More specifically, the roller 180 defines one or more roller cavities 182, which are sized and shaped to form the hemispherical cooling projections 122. Although, the one or more roller cavities 182 may be sized and shaped to form any suitable shape of cooling projection as well. While the roller 180 shown in FIG. 11 includes eight roller cavities 182, the roller 180 may include more or less roller cavities 182 as is necessary or desired. The plurality of composite plies 174 are placed on the platform 178. As illustrated in FIG. 11, the plurality of plies 174 may include four plies 176(a), 176(b), 176(c), 176(d). Although, the plurality of plies 174 may include more or less plies 176 as is necessary or desired. The roller 180 exerts downward pressure on the plurality of plies 174. Portions of the plurality of plies 174 are forced into the one or more roller cavities 182, thereby forming the one or more hemispherical cooling projections 122.

If the at least one cooling projection 122 is formed separately from the shroud wall 101, step (304) includes positioning the at least one cooling projection 122 on the radially outer side 102 of the shroud wall 101.

In alternate embodiments, the one or more hemispherical cooling projections 122 may be formed on the radially outer surface 102 of the shroud wall 101. As illustrated in FIG. 12, a press 184 may compress a first portion 196 of the radially outer surface 102 of the shroud wall 101. In this respect, a second portion 198 of the radially outer surface 102 of the shroud wall 101 is radially spaced apart from the first portion 196 to form the at least one hemispherical cooling projection 122 after compressing. As illustrated in FIG. 12, the shroud wall 101 is placed on a first mold portion 186 and held in place by a second mold portion 188; although, this is not required.

The one or more hemispherical cooling projections 122 may be formed on the shroud wall 101 with the roller 180 as illustrated in FIG. 13. More specifically, the roller 180 may compress the first portion 196 of the radially outer surface 102 of the shroud wall 101. In this respect, the second portion 198 of the radially outer surface 102 of the shroud wall 101 is radially spaced apart from the first portion 196 to form the at least one hemispherical cooling projection 122 after compressing.

In step (306), the shroud wall 101 and the one or more hemispherical cooling projections 122 are cured simultaneously. Step (306) may include curing the first and the second mounts 112, 114 with the shroud wall 101 and the one or more hemispherical cooling projections 122. In some embodiments, step (306) is performed in an autoclave (not shown).

Method (300) may also include additional steps, such as machining and/or installation into the turbofan 10. In some embodiments, for example, the shroud wall 101 and the one or more hemispherical cooling projections 122 may be sintered in a sinter furnace simultaneously. The hemispherical cooling projections 122 may be machined into the radially outer surface 102 of the shroud wall 101 after the shroud 100 cures in step (306).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A composite component (26, 54, 64, 74, 84, 84(a), 84(b), 100) for a gas turbine (10), comprising:
a composite wall (101) having a non-flow side surface (102), wherein the non-flow side surface (102) includes at least one composite cooling projection (116, 118, 120, 122, 124) positioned on and extending outwardly from the non-flow side surface (102).

2. The composite component (26, 54, 64, 74, 84, 84(a), 84(b), 100) of claim 1, wherein the composite component (26, 54, 64, 74, 84, 84(a), 84(b), 100) is a turbine shroud (74, 100), a turbine shroud mount (84, 84(a), 84(b)), a turbine stator vane (54, 64), or a combustor (26).

3. The composite component (26, 54, 64, 74, 84, 84(a), 84(b), 100) of claim 1, wherein the composite wall (101) and the at least one composite cooling projection (116, 118, 120, 122, 124) are formed from a ceramic matrix composite.

4. The composite component (26, 54, 64, 74, 84, 84(a), 84(b), 100) of claim 1, wherein the at least one composite cooling projection (116, 118, 120, 122, 124) comprises a cylindrical shape (120), a conical shape (118), or a hemispherical shape (122).

5. The composite component (26, 54, 64, 74, 84, 84(a), 84(b), 100) of claim 1, wherein the at least one composite cooling projection (116, 118, 120, 122, 124) creates at least a fifteen percent increase in heat transfer through the composite component (26, 54, 64, 74, 84, 84(a), 84(b), 100).

6. The composite component (26, 54, 64, 74, 84, 84(a), 84(b), 100) of claim 1, wherein the at least one composite cooling projection (116, 118, 120, 122, 124) creates at least a thirty percent increase in heat transfer through the composite component (26, 54, 64, 74, 84, 84(a), 84(b), 100).

7. The composite component (26, 54, 64, 74, 84, 84(a), 84(b), 100) of claim 1, wherein the at least one cooling projection (116, 118, 120, 122, 124) comprises a plurality of cooling projections (116, 118, 120, 122, 124), and wherein the plurality of cooling projections (116, 118, 120, 122, 124) are uniformly spaced apart in an axial direction (90) or a circumferential direction (94).

8. The composite component (26, 54, 64, 74, 84, 84(a), 84(b), 100) of claim 1, wherein at least one cooling projection (116, 118, 120, 122, 124) comprises a plurality of cooling projections (116, 118, 120, 122, 124), and wherein the plurality of cooling projections (116, 118, 120, 122, 124) are non-uniformly spaced apart in an axial direction (90) or a circumferential direction (94).

9. The composite component (26, 54, 64, 74, 84, 84(a), 84(b), 100) of claim 1, wherein the at least one composite cooling projection (116, 118, 120, 122, 124) defines a cavity (154) therein.

10. A method of forming a composite component for a gas turbine (300), the method (300) comprising:
forming a composite wall of the composite component, the composite wall having a non-flow side surface (302);
forming at least one composite cooling projection on the non-flow side surface of the composite wall (304); and
curing the composite wall and the at least one composite cooling projection (306).
